# EUROPÄISCHE PATENTSCHRIFT

(11) **EP 2 256 879 B1**
(45) Veröffentlichungstag und Bekanntmachung des Hinweises auf die Patenterteilung: **02.10.2013**
(21) Anmeldenummer: 09161136.8
(22) Anmeldetag: 26.05.2009
(51) Int. Cl.: H01S 3/22, H01S 3/30, H01S 3/03, H01S 3/081

(54) **Ultrakurzpulslasersystem und Verfahren zur Erzeugung von Femto- oder Pikosekundenpulsen**
Ultrashort pulse laser system and method for creating femtosecond or picosecond pulses
Système laser à impulsions ultracourtes et procédé de production d'impulsions femto- ou picosecondes

(43) Veröffentlichungstag der Anmeldung: 01.12.2010
(73) Patentinhaber: High Q Laser GmbH, 6830 Rankweil (AT)
(72) Erfinder: KOPF, Daniel, A-6832, Röthis (AT)
(74) Vertreter: Harmann, Bernd-Günther

(56) Entgegenhaltungen:
- EP-A2- 0 444 435
- WO-A1-2009/028352
- US-A- 4 194 170
- US-A- 4 740 982
- US-A1- 2005 157 382
- US-A1- 2006 193 362
- US-A1- 2007 253 453
- PALMER G ET AL: "Passively mode-locked Yb:KLu(WO4)2 thin-disk oscillator operated in the positive and negative dispersion regime" OPTICS LETTERS, Bd. 33, Nr. 14, 15. Juli 2008 (2008-07-15), Seiten 1608-1610, XP001514969 OSA, OPTICAL SOCIETY OF AMERICA, WASHINGTON, DC, US ISSN: 0146-9592
- CALENDRON A-L ET AL: "High power cw and mode-locked oscillators based on Yb:KYW multi-crystal resonators" OPTICS EXPRESS, Bd. 16, Nr. 23, 10. November 2008 (2008-11-10), Seiten 18838-18843, XP002550542 OPTICAL SOCIETY OF AMERICA ,US
- NIBBERING E T J ET AL: "Determination of the inertial contribution to the nonlinear refractive index of air, N2, and O2 by use of unfocused high-intensity femtosecond laser pulses" JOURNAL OF THE OPTICAL SOCIETY OF AMERICA B (OPTICAL PHYSICS), Bd. 14, Nr. 3, März 1997 (1997-03), Seiten 650-660, XP002550543 OPT. SOC. AMERICA USA ISSN: 0740-3224
- HENESIAN M A ET AL: "Stimulated rotational Raman scattering in nitrogen in long air paths" OPTICS LETTERS USA, Bd. 10, Nr. 11, November 1985 (1985-11), Seiten 565-567, XP002550544 ISSN: 0146-9592
- D. HERRIOTT ET AL.: "Off-Axis Paths in Spherical Mirrors Interferometers" APPLIED PHYSICS, Bd. 3, Nr. 4, April 1964 (1964-04), Seiten 523-526, XP002552652

## Beschreibung

Die Erfindung betrifft ein Ultrakurzpulslasersystem zur Erzeugung von Femto- oder Pikosekundenpulsen nach dem Oberbegriff von Anspruch 1 und ein Verfahren zur Erzeugung von Femto- oder Pikosekundenpulsen in einem solchen Ultrakurzpulslasersystem nach dem Oberbegriff des Anspruchs 15.

Ultrakurzpulslasersysteme, das heißt Laseranordnungen, die in der Lage sind, Laserpulse mit einer charakteristischen Pulsdauer im Femto- oder Pikosekundenbereich zu erzeugen, sind seit langem in verschiedenen Ausführungsformen aus dem Stand der Technik bekannt. Während in der Vergangenheit ein Betrieb unter atmosphärischen Bedingungen erfolgte, ist zunehmend auch hiermit verbundene Beschränkung von Betriebsparametern in das Blickfeld gerückt. In den letzten Jahren und Monaten sind einige wissenschaftliche Arbeiten über ultrakurzgepulste Laserresonatoren veröffentlicht worden, in welchen die Luft als eine wesentliche - und gleichzeitig limitierende - Größe erkannt wurde. Als problematisch wird hierbei der nichtlineare Brechungsindex n₂ der Luft angesehen, so dass angestrebt wird, diesen Effekt zu verringern.

So können beispielsweise in Yb:KYW- und Yb:KGW-Femtosekundenlasern grundsätzlich sehr kurze Pulse erzeugt werden, z. B. mit 100-150 fs Dauer oder auch kürzer. Allerdings setzt dies Anordnungen mit vergleichsweise kurzen Resonatoren und geringen Ausgangsleistungen bzw. Ausgangsenergien, z.B. 0,5 W bei 70 MHz Repetitionsrate, voraus. Sobald man sowohl die Laserresonatorlänge als auch die Pulsenergie erhöht, wird die routinemässig erreichbare
- kürzeste - Pulslänge deutlich länger und es sind lediglich Pulsdauern von 300 fs oder gar 500 fs erreichbar. Ein Beispiel für eine solche Laseranordnung, in der bei besonders hohen Leistungen die kürzeste erreichbare Pulsdauer knapp 500 fs beträgt wird in Calendron A. et al., "High power cw and mode-locked oscillators based on Yb:KYW multi-crystal resonators", Optics Express, Vol. 16, No. 23, 10. November 2008, Seiten 18839-18843 beschrieben.

Zur Behebung der Einflüsse von Luft wird in der US 2007/0223540 und in Palmer et al., "Passively mode-locked Yb:KLu(WO4)2 thin-disk oscillator operated in the positive and negative dispersion regime", Optics Letters, Vol. 33, No. 14 , 15. Juli 2008, Seiten 1608-1610 vorgeschlagen, die Luft durch ein von der Atmosphäre abweichenden Gas zu ersetzen oder den Laser zumindest mit Teilen des Resonators in einem evakuierbaren Druckgefäss zu betreiben. Hierbei muss ein zu verwendendes Gas oder Gasgemisch einen nichtlinearen Brechungsindex aufweisen, der geringer als der von Luft ist. Als besonders geeignet wird die Verwendung von Helium angesehen, weil dessen nichtlinearer Brechungsindex deutlich (» 10-mal) kleiner ist als in Luft.

Diese Lösungsansätze des Stands der Technik sind dabei darauf gerichtet, den nichtlinearen Brechungsindex des Gasmediums gegenüber dem Wert von Luft deutlich zu reduzieren bzw. ein Vakuum zu erzeugen. Als Nachteil ergibt sich bei der Verwendung von Helium die aufwendige technische Handhabung, da Helium schwer abzudichten ist. Darüber hinaus ergibt sich bei Femtosekundenlasern der Nachteil, dass dessen Arbeitspunkt aufgrund seiner direkten Abhängigkeit von der Selbstphasenmodulation innerhalb des Resonators und somit wegen seiner erheblichen Abhängigkeit vom nichtlinearen Brechungsindex des Gasmediums bei Heliumgeflutetem Laser deutlich hinsichtlich der Pulslänge verschoben wird.

Eine andere Alternative besteht darin, die Laseranordnung so umzubauen, dass ein besonders hoher Auskoppelgrad verwendet werden kann und somit die für die Bereitstellung der ausgekoppelten Leistung erforderliche Leistung bzw. Intensität innerhalb des Resonators verringert werden kann. Dadurch ist die Interaktion zwischen dem Laserpuls und dem Gasmedium verringert oder nicht mehr störend, so dass der Betrieb unter atmosphärischen Bedingungen möglich ist. Um beispielsweise eine 78%-Auskopplung zu realisieren, muss der Laser eine Anordnung mit einer Vielzahl von Durchgängen durch das Lasermedium aufweisen, so dass die Anordnung eine erhebliche Komplexität besitzt. Darüber hinaus hat eine solche Anordnung den Nachteil, dass sich Aberrationen im Lasermedium über alle Durchgänge hinweg aufsummieren und die Herstellung des montierten Lasermediums der aufwendigen Einhaltung von Produktionstoleranzen bedarf.

Eine dritte Alternative, welche die störende nichtlineare Interaktion zwischen Laserpuls und der Luft minimiert, besteht bei Femtosekundenlasern mit kürzeren Laserpulsen, z.B. kürzer als 500 fs, darin, dass dieser Laser nicht im sog. Soliton-Modelocking-Betriebsbereich betrieben wird, sondern im Betriebsbereich positiver Umlaufdispersion bzw. im "Chirped pulse" - Pulsbetrieb. Dort kann der innerhalb des Resonators umlaufende Puls deutlich länger gehalten, d.h. bspw. einige Pikosekunden, jedoch extern auf die gewünschte Femtosekunden-Pulslänge komprimiert werden. Nachteilig sind hier die komplexere Anordnung durch die nachfolgend erforderliche externe Kompression des Pulses und die Problematik, dass Pikosekundenlaser schwieriger gegen Instabilitäten zu stabilisieren sind. Darüber hinaus sind bisher die tatsächlich erzielten Leistungen und Pulslängen noch nicht deutlich besser als jene, die mit Soliton-Modelocking bzw. -Modenkopplung in vergleichbaren Lasern erreicht werden können.

Die beiden letzten Lösungsansätze beruhen somit auf komplexeren oder aufwendigeren technischen Anordnungen und sind zudem ebenfalls in den erreichbaren Leistungen grundsätzlich begrenzt. Die Verwendung von evakuierten Resonatorstrecken oder Füllgasen mit von Luft abweichendem nichtlinearen Brechungsindex n₂ zeigt das Problem, dass bei einer Druckänderung oder der Vermischung mit Luft eine Verschiebung des Arbeitspunktes des Lasers folgt. Gerade in Hinblick auf einen robusten Langzeitbetrieb sind entsprechend dauerhafte Dichtungen nur schwer zu realisieren. Hinzu kommt, dass gerade das im Stand der Technik favorisierte Helium aufgrund seines Atomgewichts nur schwer langfristig abzudichten ist.

Eine Aufgabe der vorliegenden Erfindung besteht in der Bereitstellung eines verbesserten Ultrakurzpulslasersystems bzw. einen Verfahren zur Erzeugung von Femto- oder Pikosekundenpulsen.

Eine weitere Aufgabe besteht in der Bereitstellung eines solchen Lasersystems, welches eine erhöhte Robustheit und Langzeitstabilität der Betriebsparameter aufweist. Insbesondere besteht eine weitere Aufgabe darin, den robusten Betrieb eines Ytterbium-Femtosekundenlaser mit einer Pulslänge kleiner al 300 fs, einer Pulswiederholrate von weniger als 50 MHz und einer Pulsenergie oberhalb von 1 µJ im Einzelpulsbetrieb zu ermöglichen.

Eine weitere Aufgabe besteht in Vergrösserung des Bereichs, in dem ein solches Lasersystem noch im Soliton-Modelocking ohne Auftreten von Doppel- oder Mehrfachpulszuständen betrieben werden kann.

Diese Aufgaben werden durch die Gegenstände des Anspruchs 1 bzw. 15 oder der abhängigen Ansprüche gelöst bzw. die Lösungen weitergebildet.

Die Erfindung betrifft Ultrakurzpulslasersysteme und ein entsprechendes Verfahren zur Erzeugung von Femto- oder Pikosekundenpulsen in einem solchen Lasersystem, d.h. in Laseranordnungen, welche von ihren verwendeten Lasermedien und Komponenten, deren Anordnung sowie den charakteristischen Betriebsparametern zur Erzeugung von Pulsen mit Dauern im Bereich von einigen hundert Pikosekunden bis hin zu einigen zehn Femtosekunden ausgelegt sind.

Die erfindungsgemässe Lösung beruht auf dem Ansatz, in einem Ultrakurzpulslasersystem innerhalb des Laserresonators einen gasgefüllten Abschnitt vorzusehen, durch den der Strahlgang geführt wird. Dieser Abschnitt kann sowohl den gesamten Resonator umfassen als auch nur einen oder einzelne Teilabschnitte. So können insbesondere zur Faltung des Strahlgangs verwendete Komponenten, die naturgemäss einen grossen Teil der Strecke definieren, als gasgefüllte Abschnitte ausgeführt werden. Erfindungsgemäss wird dieser Abschnitt mit einem einzelnen Gas oder einem von der Luftzusammensetzung abweichenden Füllgasgemisch als Füllgas gefüllt, wobei der nichtlineare Brechungsindex n₂ des gasgefüllten Abschnitts im wesentlichen dem von Luft entspricht und das Füllgas einen im Vergleich zu Luft geringeren Rotations-Raman-Effekt aufweist.

Durch den im Vergleich zu atmosphärischen Bedingungen im wesentlichen gleichen nichtlinearen Brechungsindex n₂ des Füllgases bzw. des gasgefüllten Abschnittes kann eine Verschiebung des Arbeitspunktes durch einen geringfügigen Lufteintritt verhindert oder soweit reduziert werden, dass dieser hinnehmbar ist. Erfindungsgemäss kann die Brechungsindex-Einstellung auf den wert der Luft jedoch auch durch eine Druckanpassung des nichtatmosphärischen Füllgases erfolgen, so dass in diesem Fall eine Druckveränderung bzw. ein Eindringen von Luft zu Veränderungen des Arbeitspunktes führen würde. Im Gegensatz zu Lösungen des Stands der Technik können erfindungsgemäss jedoch auch Gase und Gasgemische mit hohem Atom- oder Molekülgewicht verwendet werden, für die stabile Langzeitabdichtungen technisch gut realisierbar sind.

Die erfindungsgemässe Lösung beruht auf der Feststellung, dass die bestehenden Limitierungen des Betriebs von Ultrakurzpulslasern durch die Verringerung des Rotations-Raman-Effektes gegenüber der Luft vermieden oder zumindest verringert werden können. Eine weitergehende Verringerung erfolgt durch die Verwendung von Gasen, die auch keine Vibrations-Raman-Banden aufweisen. Eine besondere Eignung besitzt der erfindungsgemäss Ansatz dabei für Femtosekundenlaser mit einer Pulsenergie von mindestens 1 Mikrojoule innerhalb des Laserresonators und/oder einer Repetitionsrate unterhalb von 50 MHz.

Bei Verwendung von monoatomaren Gasen oder Molekülen, welche keine Vibrations- und Rotationszustände haben, stellt das Gasmedium im Laser keine Limitation mehr für die Erreichung hoher Spitzenleistungen und Spitzenintensitäten im ultrakurzgepulsten Laserresonator mehr dar. Dies ist beispielsweise bei den Edelgasen, d.h. der Verwendung von Argon, Krypton, Xenon der Fall, welche gegenüber Helium den Vorteil der wesentlich leichteren Handhabung geniessen und darüber hinaus einen nichtlinearen Brechungsindex haben, der im Gegensatz zu Helium nicht wesentlich von dem der Luft abweicht. Es ergibt sich somit gegenüber Helium der Vorteil, dass bei einer Druckveränderung oder einer teilweisen Vermischung mit der außen anliegenden Luft, was über lange Betriebszeiten von Monaten und Jahren eines abgedichteten Gehäuses auch bei guter technischer Ausführung nur schwer zu vermeiden ist, keine wesentliche Veränderung des Arbeitspunktes aufgrund des nicht oder im Vergleich zur Verwendung von Helium nur unwesentlich geänderten nichtlinearen Brechungsindexes zu erwarten ist.

Eine Zunahme der Signalstrahlung in einer Laseranordnung aufgrund des Ramaneffektes kann als Produkt aus (a) dem materialabhängigen Raman-Gain-Koeffizienten, (b) der Intensität der Pumpstrahlung, (c) der Intensität der Signalstrahlung und (d) der Interaktionslänge beschrieben werden.

In Fasern ist der Raman-Effekt bekannt und ermöglicht dort z.B. Raman-Laser und den Soliton-Self-Frequency-Shift. Der Raman-Effekt ist dabei in Fasern deswegen so ausgeprägt beobachtbar, weil ein geringer Strahlradius und eine lange Interaktionslänge gleichzeitig erzielbar sind. Bei Fasern gibt es jedoch grundsätzlich keine Rotationszustände der fix eingebauten Ionen, was im Gegensatz zu den meisten molekularen Gasen, wie z.B. Stickstoff, steht, welche Rotationszustände besitzen, die bereits bei deutlich geringeren Energien angeregt werden können.

Für Stickstoff als das die Luft dominierende Gas können bspw. Henesian M. A. et al., "Stimulated rotational Raman scattering in nitrogen in long air paths", Optics Letters, Vol. 10, No. 11, November 1985, Seiten 565-567 folgende Werte entnommen werden: gR = 2,5 10⁻¹⁴ m/W bei 1053nm Pumpwellenlänge sowie Verschiebungen von 59, 75, und 91cm⁻¹. In einer groben Abschätzung ist der ("rotational") Raman-Gain-Koeffizient für Stickstoff zwar nominell 4- bis 5-mal geringer als der Raman-Gain-Koeffizient in einer Glasfaser, dafür ist der Frequenzoffset mehr als 5-Mal kleiner, sodass im Ergebnis die Steigung des Raman-Gain-Koeffizienten als Funktion des Frequenzoffsets für Stickstoff sogar größer ist als jene für die Glasfaser. Das heißt, dass der Raman-Effekt bei geringem Frequenzoffset bei ansonsten gleichen Parametern in Luft bzw. Stickstoff größer ist als in einer Glasfaser.

Geeignete Gase ohne Rotations-Raman-Banden sind monoatomare Gase, zum Beispiel Edelgase oder Moleküle, deren Hauptträgheitsmomente gleich oder annähernd gleich sind, d.h. als sphärische Kreisel ausgebildet sind. Durch die Symmetrie dieser Moleküle ergibt sich, dass sie kein permanentes Dipolmoment aufweisen und damit kein Rotationsspektrum zeigen. Beispiele hierfür sind Methan oder Schwefelhexafluorid.

Erfindungsgemäss erfolgt somit eine Verwendung von Gasen oder Gasgemischen mit einem der Luft gleichen oder im wesentlichen entsprechenden nichtlinearen Brechungsindex jedoch einem gegenüber der Luft reduzierten Rotations-Raman-Effekt. Dies ist insbesondere vorteilhaft, sobald die Pulsenergie innerhalb des Laserresonators ein Mikrojoule übersteigt und/oder die Laserrepetitionsrate unter 50 MHz liegt.

Durch die erfindungsgemäss mögliche Alternative zur Verwendung von Helium oder Neon können auch Gase und Gasgemische zum Einsatz kommen, deren Gasteilchen Atome oder Moleküle sind, die ein Atomgewicht von mehr als 20 atomaren Masseneinheiten aufweisen. Die Dichtigkeit von O-Ringen oder anderen Dichtungen, wie sie zur Erreichung der Gasdichtigkeit eines Gehäuses oder eines Gehäuseabschnittes erforderlich sind, ist ungefähr proportional zum Atom- bzw. Molekülgewicht der darin enthaltenen Gasteilchen. Dadurch ergibt sich der Vorteil, dass die technische Realisierung eines gasdichten Gehäuses mit vergleichsweise schweren Gasen wesentlich einfacher und vorteilhafter ist, da eine längere Dichtheit zu gewährleisten ist. Als Vergleich können folgende Atom- oder Molekulargewichte von Gasteilchen dienen:
Helium He: 4;
Methan CH₄: 16;
Neon Ne: 20;
Stickstoff N₂: 28;
Sauerstoff O₂: 32;
Argon Ar: 40;
Krypton Kr: 84;
Xenon Xe: 131;
Schwefelhexafluorid SF₆: 146;
Tetrachlorkohlenstoff CCl₄: 152.

Zudem sollten verwendbare Gase chemisch inert sein, was aber für die angeführten Edelgase und Halogenide der Fall ist.

Konkrete Werte für den nichtlinearen Brechungsindex n können beispielsweise der Tabelle 3 auf Seite 658 in Nibbering E. T. J. et al., "Determination of the inertial contribution to the nonlinear refractive index of air, N2 and O2 by use of unfocused high-intensity femtosecond laser pulses", JOSA B, Vol. 14, No. 3, März 1997, Seiten 650-660 entnommen werden, wobei diese für eine Wellenlänge von 800nm und eine Pulslänge von 120 fs gelten.
Ar 1,4 · 10⁻²³ m²/W Rotations-Raman-Beitrag = 0
Xe 8,1 · 10⁻²³ m²/W Rotations-Raman-Beitrag = 0
SF₆ 1,6 · 10⁻²³ m²/W Rotations-Raman-Beitrag = 0
N₂ 2,3 · 10⁻²³ m²/W Rotations-Raman-Beitrag = 2,3 · 10²⁸ m²/J
O₂ 5,1 · 10⁻²³ m²/W Rotations-Raman-Beitrag = 8,5 · 10⁻²⁸ m²/J
Luft 2,9 · 10⁻²³ m²/W Rotations-Raman-Beitrag = 3,6 · 10⁻²⁸ m²/J

Werte für eine Wellenlänge von 1020-1070 nm dürften etwas geringer sein. Aus obiger Liste können beispielsweise folgende Gase erfindungsgemäss als Füllgase für Ultrakurzpulslasersysteme, einzeln oder in einem Gasgemisch, Verwendung finden, wobei die Reduktion der Raman-Interaktion zwischen dem Gas und dem Laserpuls verschiedene Grade erreichen kann:
(1) SF₆ (keine Rotations-Raman-Banden)
(2) Ar/Xe-Gemisch (keine Rotations-Raman-Banden)
(3) Ar/Xe-Gemisch mit einem Xe-Anteil und einem Druck derart, dass n₂ gleich ist wie für Luft (keine Rotations-Raman-Banden)
(4) Kr (keine Rotations-Raman-Banden), ggf. mit einer geeigneten Druckanpassung so, dass der nichtlineare Brechungsindex n₂ des Gemisches jenem der Luft entspricht
(5) Ar/O₂ (gegenüber Luft verringerter Rotations-Raman-Effekt), wobei der O₂-Anteil derart bemessen sein kann, dass der nichtlineare Brechungsindex n₂ des Gemisches jenem der Luft entspricht
(6) Ar/N₂ (gegenüber Luft verringerter Rotations-Raman-Effekt)
(7) Ar, Kr oder Xe mit O₂ gemischt, so dass ein Gemisch entsteht, das eingeatmet werden kann und gleichzeitig einen nichtlinearen Brechungsindex n₂ aufweist, der jenem der Luft entspricht

Diese erfindungsgemässe Verwendbarkeit solcher Füllgase und deren Auswirkungen werden durch experimentellen Messungen in einem Yb:KYW-Femtosekundenlaser mit einer Intracavity-Spitzenintensität von ca. 5-10 GW/cm² und einer Resonatorlänge von 15 m bestätigt. Hier kann beobachtet werden, dass die gewünschten kurzen Pulse bei gleichzeitig erwünschter Pulsenergie aufgrund der Interaktion zwischen dem Laserpuls und dem Gasmedium Luft eine gewisse Spitzenintensität nicht überschreiten können. Die in diesem Zusammenhang zu machenden Beobachtungen stehen nicht in Einklang mit der aus dem Stand der Technik bekannten Forderung nach Reduktion des nichtlinearen Brechungsindexes durch Verwendung von Helium.

Beim Erhöhen der Pumpleistung im Laser wird die Pulslänge in Soliton-Modenkopplung erwartungsgemäß kürzer, jedoch verschiebt sich die zentrale Wellenlänge von anfangs ∼1040 nm sukzessive auf bis zu 1045 nm. Wird der Bereich des stabilen Einzelpulsbetriebes überschritten, d.h. bei weiter erhöhter Pumpleistung, so läuft der Laser im Doppel- oder Mehrfachpulsbetrieb, hat deutlich mehr Leistung und darüber hinaus eine zentrale Wellenlänge, die wieder näher bei 1040nm liegt, d.h. die Wellenlänge springt zurück. Diese Beobachtungen gelten bei Luft als Gasmedium im Laser.

Wird hingegen Argon verwendet, so folgt ein abweichendes Verhalten. Hier ist eine Instabilität bzw. der Doppelpulsbetrieb nicht mehr zu beobachten und der Laser emittiert deutlich höhere Leistung und kürzere Pulse im erwünschten Singlepulsbetrieb. Es ist keine spektrale Verschiebung messbar. Die gleichen Beobachtungen können auch unter Verwendung von Xenon gemacht werden.

Das erfindungsgemässe Ultrakurzpulslasersystem bzw. das erfindungsgemässe Verfahren zur Erzeugung von ultrakurzen Laserpulsen werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung eines ersten Ausführungsbeispiels des erfindungsgemässen Ultrakurzpulslasersystems;
- Fig.2: die gemessene Durchschnittsleistung im Resonator für eine luftgefüllte Ausführungsform gemäss Figur 1;
- Fig.3: die gemessene Durchschnittsleistung im Resonator für das erste Ausführungsbeispiel des erfindungsgemässen Ultrakurzpulslasersystems und
- Fig.4: die schematische Darstellung eines zweiten Ausführungsbeispiels des erfindungsgemässen Ultrakurzpulslasersystems.

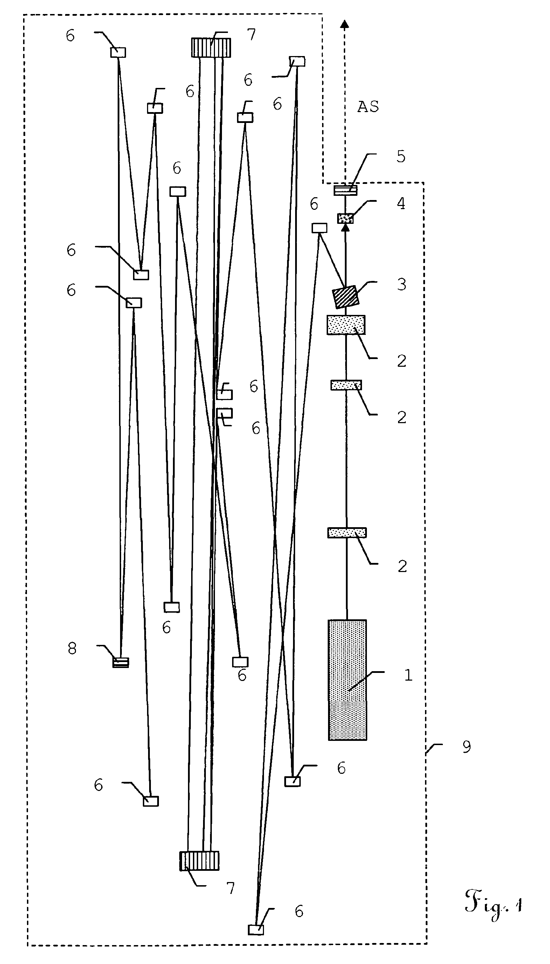

Fig.1 zeigt die schematische Darstellung einer Laseranordnung für ein erstes Ausführungsbeispiel des erfindungsgemässen Ultrakurzpulslasersystems zur Erzeugung von Femto- oder Pikosekundenpulsen. Die Laseranordnung weist hierbei mindestens eine Pumpquelle 1, insbesondere eine Laserdiodenquelle, zum Pumpen eines verstärkenden Lasermediums 4 zur Erzeugung einer Laseremission auf, wobei der Pumpstrahlengang über eine Folge von Linsen 2 als Einkoppeloptik und einen dichroitischen Pumpspiegel 3 geführt wird. Die Auskopplung der nutzbaren Laseremission AS erfolgt über ein dem Lasermedium 4 nachgeschalteten optischen Auskoppler 5. In diesem Beispiel wird Yb:KYW als Lasermedium 4 verwendet, das innerhalb des Laserresonators mit mehreren gekrümmten oder planaren Resonatorspiegeln 6 plaziert ist. Von den Resonatorspiegeln sind einzelne mit einer Beschichtung ausgeführt, die eine negative Gruppengeschwindigkeitsdispersion (GVD) haben. Der Laserresonator weist zudem zwei Herriottspiegel 7 und einen sättigbaren Absorberspiegel 8 als Komponente zur Erzeugung einer Modenkopplung auf.

In diesem Ultrakurzpulslasersystem ist entweder die gesamte Anordnung oder nur ein Abschnitt innerhalb des Laserresonators mit einem Füllgas aus einem einzelnem Gas oder einem von der Luftzusammensetzung abweichenden Füllgasgemisch gefüllt ist, wobei der nichtlineare Brechungsindex n₂ des gasgefüllten Abschnitts 9 im wesentlichen dem von Luft entspricht und das Füllgas einen im Vergleich zu Luft geringeren Rotations-Raman-Effekt aufweist, was beispielsweise durch atomaren Gase oder bei molekularen Gasen dann realisiert wird, wenn ein Teil, insbesondere mehr als die Hälfte der Moleküle des Füllgases die Eigenschaft eines sphärischen Kreisels aufweisen. Dabei wird der Strahlgang der zu erzeugenden Laseremission durch diesen gasgefüllten Abschnitt 9 innerhalb des Laserresonators geführt. Damit ist eine Spitzenintensität innerhalb des Laserresonators von mehr als 2 GW/cm², insbesondere von mehr als 5 GW/cm² im stabilen Einzelpulsbetrieb erzeugbar.

Das Füllgas kann entweder in einem die gesamte Anordnung umfassenden dichten Gefäss oder aber nur für einzelne Komponenten oder abschnittsweise in kleineren Behältnissen enthalten sein. So kann beispielsweise ein gasgefüllter Abschnitt als gasdichte Herriott-Zelle ausgeführt werden. Für ein die gesamte Anordnung kapselndes Gefäss kann wie in diesem Beispiel dargestellt die optische Schnittstelle des Gefässes durch den Auskoppler 5 als optisches Fenster realisiert werden. Neben einer rein gasdichten Ausführung kann der gasgefüllte Abschnitt 9 auch als Druckgefäss mit einstellbarem, insbesondere regelbarem Druck ausgeführt ist. Es ist hierbei von Vorteil, das Füllgas annähernd bei atmosphärischem Druck in den Laser einzubringen. Den Laserresonator oder Teile dessen in ein Vakuum zu setzen hat den technischen Nachteil, dass dann das Gehäuse unter massivem Aussendruck steht und eine Verformung und Verbiegung unvermeidlich ist, z.B. entstehen bei einer Fläche von 1 m² bis zu 10 Tonnen Belastung. Die kippempfindlichen Komponenten der Laserresonatoren reagieren auf eine solche Verformung in der Regel mit Leistungsverlust, der zudem vom außen anliegenden Luftdruck abhängig ist. Dies erfordert je nach Anwendung eine aufwendige Leistungsregelung durch Justage des Resonators, was in der Regel unerwünscht ist. Daher ist es von Vorteil, die Differenz zwischen Innen- und Aussendruck zu minimieren. Die Verwendung eines Druckausgleichsgefäßes, erlaubt es, die Druckdifferenz zwischen Innen- und Außenraum bei Luftdruckschwankungen annähernd konstant zu halten, so dass entsprechende Belastungen vermieden oder zumindest verringert werden können. Um die Zusammensetzung des Füllgases unverändert zu halten bzw. bei Gasverlusten einen Ersatz zu ermöglichen, kann eine Gasdruckdose oder Gaspatrone und ein vorzugsweise geregeltes Ventil verwendet werden. Diese Anordnung dient als Reservoir bzw. Speicherkomponente für das Füllgas oder seine Bestandteile, um die unvermeidliche Leckrate eines Gehäuses zu kompensieren und für einen konstanten Innendruck zu sorgen.

Das Füllgas kann aus einem einzigen atomaren oder molekularen Gas bestehen oder aber ein Gemisch aus verschiedenen Gasen bestehen, wobei je nach Zweck und den verwendeten weiteren Gasen auch ein Anteil von Luft verwendet werden kann. Das Füllgas kann beispielsweise zu wenigstens 20 Volumenprozent, insbesondere zu wenigstens 50 Volumenprozent, aus einem Gas bestehen, das keine Rotations-Raman-Banden oder auch zusätzlich keine Vibrations-Raman-Banden aufweist. Das Füllgas kann insbesondere Argon, Xenon, Krypton, Methan, Tetrachlorkohlenstoff und/oder Schwefelhexafluorid als einzigem Gas bestehen oder dieses als Teil einer Gasmischung aufweisen.

Um die Flüchtigkeit der Gasfüllung bzw. das Passieren der Dichtungen zu verringern, kann Füllgas ausschliesslich aus Gasen mit einem Atom- oder Molekulargewicht gleich oder größer als dem Zwanzigfachen der atomaren Masseneinheit zusammengesetzt ist.

Das dargestellte erste Ausführungsbeispiel ist als Femtosekundenlaser mit Yb:KYW oder Yb:KGW als Lasermedium 4, mit einer 30W-Laserdiode bei 980 nm als Pumpquelle 1, einem 7,5 m langem Resonator, d.h. einer Pulswiederholrate von 20 MHz, einer Auskopplung von 6,5 % und einer Pulslänge von 250 bis 300 fs bei einer zentralen Wellenlänge von 1040 - 1045 nm ausgebildet. Zum Starten und Stabilisieren der Modenkopplung dient der sättigbare Absorberspiegel 8. Anstelle von Luft wird hier als Beispiel ein Edelgas als atomares Gas mit einem nichtlinearem Brechungsindex unweit von dem von Luft, also z. B. Argon, Krypton oder Xenon, verwendet. Der Laser wird im Soliton-Modenkopplungsbereich betrieben und enthält vier GTI-Laserfaltspiegel 6 mit einer negativen Gruppengeschwindigkeitsdispersion von 500 fs². Es wird, z.B. im Gegensatz zum Chirped-pulse-Pulsbetrieb, keine externe Pulskompression benötigt.

Die in diesem Laseraufbau erzielbare Leistung im stabilen Singlepulsbetrieb liegt mit dem Füllgas im Gegensatz zu Luft deutlich höher und erreicht problemlos über 3 W, da der Raman-Effekt keine Limitation durch Frequenzschiebung darstellt. Aus dem Stand der Technik sind weitere konkrete Anordnungen bekannt, die einen Yb:KYW- oder Yb:KGW-Laser mit solchen Parametern beschreiben.

Eine weitere Fortbildung ergibt sich, wenn durch eine Steuereinheit der Druck so regelbar ist, dass eine vorgegebene Pulslänge erzeugbar ist. Hierdurch wird eine Laseranordnung mit einstellbarer Pulslänge und/oder spektraler Breite bereitgestellt, bei dem eine solche Einstellung erfolgen kann, ohne dass die Pumpleistung verändert werden muss, d.h. bei optimaler Leistung. Der gewünschte bzw. eingeregelte Gasdruck bewirkt eine im Laserbetrieb beabsichtigte Pulslänge des Femtosekunden- oder Pikosekundenpulszuges, was zur Regelung messtechnisch oder rechnerisch bestimmt werden kann.

Das erfindungsgemässe Ultrakurzpulslasersystem kann mit einer Vielzahl von Materialien mit dem gleichen Ziel, kurze Laserpulse mit einer Spitzenleistung von einigen GW/cm² im Resonator zu erreichen, als Lasermedium 4 realisiert werden. So kommen bspw. Yb:KYW, Yb:KGW, Yb:YAG, Yb:KLuW, Nd:YAG oder Nd:Vanadat in Frage, wobei z. B. mit Yb:YAG Pulslängen um 700 fs oder bis zu einigen Pikosekunden oder mittels Yb:KLuW, Nd:YAG oder Nd:Vanadat Pikosekundenpulse erzeugt werden können.

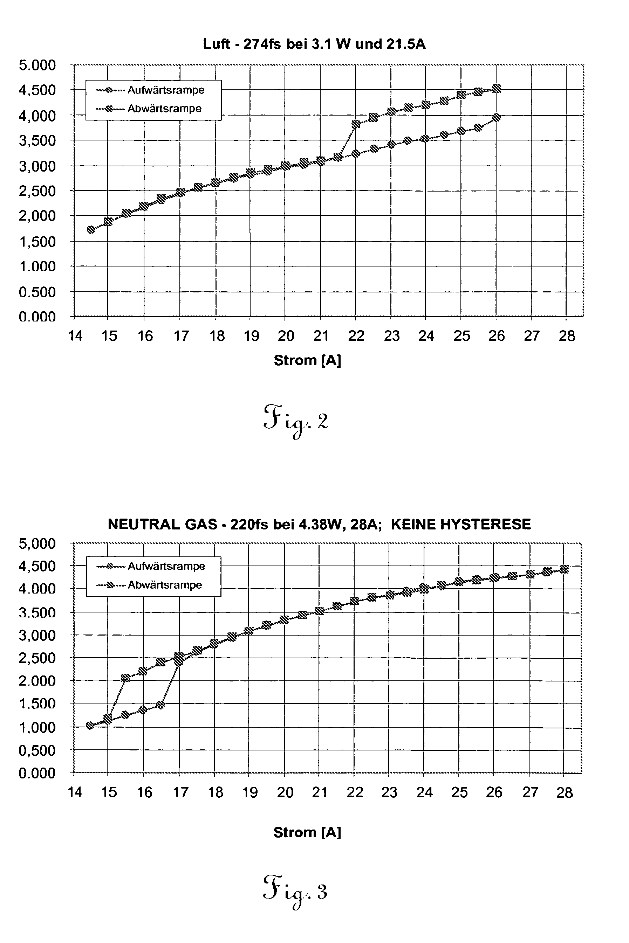

Die gemessene Durchschnittsleistung im Resonator für eine luftgefüllte Ausführungsform gemäss Figur 1 wird in Fig. 2 gezeigt. In diesem Fall wird diese Laseranordnung nicht erfindungsgemäss mit einem speziellen Füllgas betrieben sondern unter atmosphärischen Bedingungen, d. h. mit einer Luftfüllung betrieben. Dargestellt ist der Verlauf der Leistung gegenüber dem Pumpstrom, wobei sowohl die ansteigende als auch die abfallende Rampe gezeigt sind. Unter diesen Umständen kann bei der Erhöhung des Pumpstroms der kürzeste stabile Puls bei 274 fs und einer Durchschnittsleistung von 3,1 W erreicht werden. Bei höheren Strömen ergibt sich eine unerwünschte Bistabilität, d.h. der Laser läuft entweder im Einzelpulsbetrieb oder im Doppelpulsbetrieb, ohne dass hier eine externe Einstellung oder Auswahl erfolgen kann. Im Doppelpulsbetrieb ist die Pulsenergie auf zwei Pulse aufgeteilt, und jeder Puls hat eine längere Pulslänge.

Fig.3 zeigt in gleicher Weise die gemessene Durchschnittsleistung im Resonator für das erste Ausführungsbeispiel des erfindungsgemässen Ultrakurzpulslasersystems, d.h. mit einem erfindungsgemässen Füllgas. Bei Verwendung eines neutralen Gasgemisches, z. B. einem Argon/Krypton- oder Argon/LuftGemisch, entfällt die Bistabilität und der Laser emittiert stabile 220 fs Pulse bei 4,38 W Leistung. Die Spitzenleistung im Resonator beträgt 16,6 MW, die Spitzenintensität an einer Einschnürung des Lasermodes im Resonator 19,6 GW/cm² bei einer Modenfläche von 165² µm².

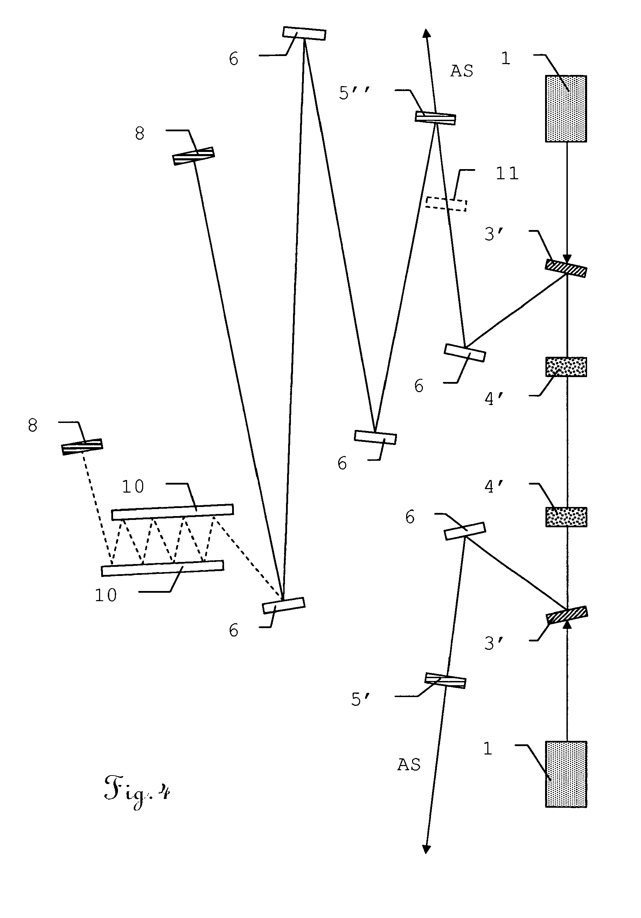

In Fig.4 erfolgt die schematische Darstellung eines zweiten Ausführungsbeispiels des erfindungsgemässen Ultrakurzpulslasersystems. Die Anordnung der Laserkomponenten entspricht dabei dem bereits eingangs erwähnten und in Calendron A. et al., "High power cw and mode-locked oscillators based on Yb:KYW multi-crystal resonators", Optics Express, Vol. 16, No. 23, 10. November 2008, Seiten 18839-18843 beschriebenen Lasersystem, wobei dieses statt in Luft nun in Argon oder einem anderen geeigneten Gas mit einem der Luft ähnlichem nichtlinearen Brechungsindex n₂ betrieben wird und daher deutlich kürzere Pulse generiert.

Die Laseranordnung verwendet nunmehr zwei fasergekoppelte 30W-Laserdioden mit 981 nm Wellenlänge und einem Kerndurchmesser von 200 µm als Pumpquellen 1, die über ein nicht dargestelltes Linsensystem und zwei dichroitische Pumpspiegel 3' in zwei Lasermedien 4' eingekoppelt werden. Als Material für die Lasermedien 4' werden Yb:KYW-Kristalle verwendet. Der Laserresonator wird durch eine Folge von gekrümmten und planaren Resonatorspiegeln 6 sowie einem sättigbaren Absorberspiegel 8 gebildet. Zwei Gires-Tournois-Interferometerspiegel 10 mit - 500 fs² negativer Dispersion können optional zur Dispersionskorrektur verwendet werden.

Durch Einbringen eines Spiegels 11 in den Laserresonator wird ein kurzer symmetrischer Resonator erzeugt, aus dem mit einem Auskoppler 5' mit einer Reflektivität von 90 % die Laseremission AS ausgekoppelt werden kann.

Für den Betrieb des langen Laserresonators in Soliton-Modenkopplung, d.h. ohne den Spiegel 11, besitzt der Auskoppler 5' eine Reflektivität von 85 %. Im Falle der Dispersionskorrektur durch die Gires-Tournois-Interferometerspiegel 10 wird die Reflektivität des optischen Auskopplers 5' auf 99 % erhöht, während ein zweiter Auskoppler 5" mit 95 % Reflektivität und + 250 fs² Dispersion ergänzt wird.

Als weitere erfindungsgemässe Ausführungsbeispiele kann beispielsweise ein Femtosekundenlaser mit mehr als einem Mikrojoule Intracavity-Pulsenergie anstelle einer mehrprozentigen Auskopplung mit Hilfe von akustooptischem oder elektrooptischem Pulsauskopplern, d.h. einem sogenannten Cavity-Dumping betrieben werden. Dieser wird mit einer Frequenz ausgekoppelt, die mindestens das Zweifache der Resonatorumlauffrequenz beträgt. Beim Cavity-Dumping ist es üblicherweise erwünscht, möglichst hohe Pulsenergie innerhalb des Laserresonators zu erreichen. Es wird daher meist keine Auskopplung verwendet, um die Leistung innerhalb des Laserresonators und somit die Pulsenergie maximal zu erhöhen, die Auskopplung erfolgt letztlich nur auf dem Wege des Cavity Dumpings. Aufgrund des Raman-Effektes in molekularen Gasen ist die Maximierung der Intracavity-Pulsenergie - vorausgesetzt dass kurze (z.B. Femtosekunden-Pulse erwünscht sind und somit die Spitzenintensität etliche GW/cm² im Resonator übersteigen kann - einer Limitation unterworfen bzw. eine Erhöhung der Pulsenergie innerhalb des Laserresonators nur bei Inkaufnahme von gleichzeitig länger werdenden Pulsen möglich, was für einige Anwendungen unerwünscht ist. Diese Limitation entfällt bei Verwendung eines erfindungsgemässen Füllgases anstelle von Luft. Insbesondere Femtosekundenlaser nach dem Prinzip der Pulsauskopplung profitieren speziell davon, dass der Resonator erfindungsgemäss in einem solchen Füllgas betrieben werden kann.

## Patentansprüche

1. Ultrakurzpulslasersystem zur Erzeugung von Femto- oder Pikosekundenpulsen mit mindestens
• einem verstärkenden Lasermedium (4) zur Erzeugung einer Laseremission (AS);
• einem Laserresonator mit wenigstens einem Resonatorspiegel (6) und wenigstens einem gasgefüllten Abschnitt (9); und
• einer Pumpquelle (1), insbesondere eine Laserdiodenquelle, zum Pumpen des Lasermediums (4,4');
insbesondere mit einer Pulsenergie von mindestens 1 mikrojoule innerhalb des Laserresonators und/oder einer Repetitionsrate unterhalb von 50 MHz,
**dadurch gekennzeichnet, dass**
der gasgefüllte Abschnitt (9) mit einem Füllgas aus einem einzelnen Gas oder einem von der Luftzusammensetzung abweichenden Füllgasgemisch gefüllt ist, wobei:
- der nichtlineare Brechungsindex n₂ des gasgefüllten Abschnitts im wesentlichen dem von Luft entspricht; und
- das Füllgas einen im Vergleich zu Luft geringeren Rotations-Raman-Effekt aufweist.

2. Ultrakurzpulslasersystem nach Anspruch 1,
**dadurch gekennzeichnet, dass**
das Füllgas zu wenigstens 20 Volumenprozent, insbesondere zu wenigstens 50 Volumenprozent, aus einem Gas besteht, das keine Rotations-Raman-Banden aufweist.

3. Ultrakurzpulslasersystem nach Anspruch 2,
**dadurch gekennzeichnet, dass**
das Füllgas keine Vibrations-Raman-Banden aufweist.

4. Ultrakurzpulslasersystem nach einem der vorangehenden Ansprüche,
**dadurch gekennzeichnet, dass**
das Füllgas ausschliesslich aus Gasen mit einem Atom- oder Molekulargewicht gleich oder größer als das Zwanzigfache der atomaren Masseneinheit zusammengesetzt ist.

5. Ultrakurzpulslasersystem nach einem der vorangehenden Ansprüche,
**dadurch gekennzeichnet, dass**
das Füllgas Argon, Xenon, Krypton, Methan, Tetrachlorkohlenstoff oder Schwefelhexafluorid oder eine Kombination von wenigstens zwei dieser Gase aufweist.

6. Ultrakurzpulslasersystem nach einem der vorangehenden Ansprüche,
**dadurch gekennzeichnet, dass**
mehr als die Hälfte der Moleküle des Füllgases die Eigenschaft eines sphärischen Kreisels aufweisen.

7. Ultrakurzpulslasersystem nach einem der vorangehenden Ansprüche,
**dadurch gekennzeichnet, dass**
der gasgefüllte Abschnitt (9) als Druckgefäss mit einstellbarem, insbesondere regelbarem Druck ausgeführt ist.

8. Ultrakurzpulslasersystem nach Anspruch 7,
**dadurch gekennzeichnet, dass**
durch eine Steuereinheit der Druck so regelbar ist, dass eine vorgegebene Pulslänge erzeugbar ist.

9. Ultrakurzpulslasersystem nach Anspruch 7 oder 8,
**gekennzeichnet durch**
eine Speicherkomponente für das Füllgas oder seine Bestandteile.

10. Ultrakurzpulslasersystem nach einem der vorangehenden Ansprüche,
**dadurch gekennzeichnet, dass**
der gasgefüllte Abschnitt als Herriott-Zelle ausgeführt ist.

11. Ultrakurzpulslasersystem nach einem der vorangehenden Ansprüche,
**gekennzeichnet durch**
eine Komponente zur Erzeugung einer Modenkopplung, insbesondere einen sättigbaren Absorberspiegel (8).

12. Ultrakurzpulslasersystem nach einem der vorangehenden Ansprüche,
**dadurch gekennzeichnet, dass**
das Lasermedium (4,4') Yb:KYW, Yb:KGW, Yb:YAG, Yb:KLuW, Nd:YAG oder Nd:Vanadat aufweist.

13. Ultrakurzpulslasersystem nach einem der vorangehenden Ansprüche,
**dadurch gekennzeichnet, dass**
eine Spitzenintensität innerhalb des Laserresonators von mehr als 2, insbesondere von mehr als 5 GW/cm² erzeugbar ist.

14. Ultrakurzpulslasersystem nach einem der vorangehenden Ansprüche,
**gekennzeichnet durch**
eine elektrooptische oder akustooptische Pulsauskopplungskomponente im Laserresonator

15. Verfahren zur Erzeugung von Femto- oder Pikosekundenpulsen in einem Ultrakurzpulslasersystem mit mindestens:
• einem verstärkenden Lasermedium (4) zur Erzeugung einer Laseremission (AS);
• einem Laserresonator mit wenigstens einem Resonatorspiegel (6); und
• einer Pumpquelle (1), insbesondere eine Laserdiodenquelle, zum Pumpen des Lasermediums (4,4'); und
einem Führen des Strahlgangs der zu erzeugenden Laseremission (AS) durch einen gasgefüllte Abschnitt (9) innerhalb des Laserresonators, insbesondere mit einer Pulsenergie von 1 mikrojoule innerhalb des Laserresonators und/oder einer Repetitionsrate unterhalb von 50 MHz,
**dadurch gekennzeichnet, dass**
der gasgefüllte Abschnitt (9) mit einem Füllgas aus einem einzelnen Gas oder einem von der Luftzusammensetzung abweichenden Füllgasgemisch gefüllt ist, wobei:
- der nichtlineare Brechungsindex n₂ des gasgefüllten Abschnitts im wesentlichen dem von Luft entspricht; und
- das Füllgas einen im Vergleich zu Luft geringeren Rotations-Raman-Effekt aufweist.

## Claims

1. Ultrashort pulse laser system for generating femtosecond or picosecond pulses, having at least
• an amplifying laser medium (4) for generating a laser emission (AS);
• a laser resonator having at least one resonator mirror (6) and at least one gas-filled section (9); and
• a pump source (1), in particular a laser diode source, for pumping the laser medium (4, 4');
in particular having a pulse energy of at least 1 microjoule inside the laser resonator and/or a repetition rate of less than 50 MHz,
**characterized in that**
the gas-filled section (9) is filled with a fill gas composed of a single gas or a fill-gas mixture which deviates from the air composition, wherein:
- the non-linear refractive index n₂ of the gas-filled section substantially corresponds to that of air; and
- the fill gas has a lower rotational Raman effect compared to air.

2. Ultrashort pulse laser system according to Claim 1, **characterized in that** the fill gas consists of at least 20 percent by volume, in particular at least 50 percent by volume, of a gas which has no rotational Raman bands.

3. Ultrashort pulse laser system according to Claim 2, **characterized in that** the fill gas has no vibrational Raman bands.

4. Ultrashort pulse laser system according to any one of the preceding claims, **characterized in that** the fill gas is composed exclusively from gases having an atomic or molecular weight that is equal to or greater than twenty times the atomic mass unit.

5. Ultrashort pulse laser system according to any one of the preceding claims, **characterized in that** the fill gas has argon, xenon, krypton, methane, carbon tetrachloride or sulphur hexafluoride or a combination of at least two of these gases.

6. Ultrashort pulse laser system according to any one of the preceding claims, **characterized in that** more than half the molecules of the fill gas have the property of a spherical top.

7. Ultrashort pulse laser system according to any one of the preceding claims, **characterized in that** the gas-filled section (9) is configured as a pressure vessel having an adjustable, in particular controllable pressure.

8. Ultrashort pulse laser system according to Claim 7, **characterized in that** the pressure is controllable using a control unit such that a prespecified pulse length can be generated.

9. Ultrashort pulse laser system according to Claim 7 or 8, **characterized by** a storage component for the fill gas or its constituent parts.

10. Ultrashort pulse laser system according to any one of the preceding claims, **characterized in that** the gas-filled section is configured as a Herriott cell.

11. Ultrashort pulse laser system according to any one of the preceding claims, **characterized by** a component for generating mode coupling, in particular a saturable absorber mirror (8).

12. Ultrashort pulse laser system according to any one of the preceding claims, **characterized in that** the laser medium (4, 4') has Yb:KYW, Yb:KGW, Yb:YAG, Yb:KLuW, Nd:YAG or Nd:vanadate.

13. Ultrashort pulse laser system according to any one of the preceding claims, **characterized in that** a peak intensity of more than 2, in particular more than 5 GW/cm² can be generated inside the laser resonator.

14. Ultrashort pulse laser system according to any one of the preceding claims, **characterized by** an electro-optical or acousto-optical pulse coupling-out component in the laser resonator.

15. Method for generating femtosecond or picosecond pulses in an ultrashort pulse laser system, having at least:
• an amplifying laser medium (4) for generating a laser emission (AS);
• a laser resonator having at least one resonator mirror (6); and
• a pump source (1), in particular a laser diode source, for pumping the laser medium (4, 4'); and
guiding the beam path of the laser emission (AS) to be generated through a gas-filled section (9) inside the laser resonator, in particular having a pulse energy of 1 microjoule inside the laser resonator and/or a repetition rate of less than 50 MHz,
**characterized in that**
the gas-filled section (9) is filled with a fill gas composed of a single gas or a fill-gas mixture which deviates from the air composition, wherein:
- the non-linear refractive index n₂ of the gas-filled section substantially corresponds to that of air; and
- the fill gas has a lower rotational Raman effect compared to air.

## Revendications

1. Système laser à impulsions ultracourtes pour la génération d'impulsions femtosecondes ou picosecondes avec au moins
• un milieu amplifiant du laser (4) pour produire une émission laser (AS) ;
• un résonateur laser avec au moins un miroir de résonateur (6) et au moins une section remplie de gaz (9) et
• une source de pompage (1), en particulier une source de diode laser, pour pomper le milieu laser (4, 4'),
en particulier avec une énergie d'impulsions d'au moins 1 microjoule à l'intérieur du résonateur laser et/ou un taux de répétition au-dessous de 50 MH2, **caractérisé en ce que**
la section remplie de gaz (9) est remplie d'un gaz de remplissage composé d'un seul gaz ou d'un mélange de gaz de remplissage différent de la composition de l'air,
- l'indice de réfraction non linéaire n₂ de la section remplie de gaz correspondant substantiellement à celui de l'air et
- le gaz de remplissage présentant un effet de rotation Raman plus faible par comparaison à l'air.

2. Système laser à impulsions ultracourtes selon la revendication 1,
**caractérisé en ce que**
le gaz de remplissage présente au moins 20 % en volume, en particulier au moins 50 % en volume d'un gaz qui ne présente pas de bandes de rotation Raman.

3. Système laser à impulsions ultracourtes selon la revendication 2,
**caractérisé en ce que**
le gaz de remplissage ne présente pas de bandes de vibration Raman.

4. Système laser à impulsions ultracourtes selon l'une des revendications précédentes,
**caractérisé en ce que**
le gaz de remplissage est composé exclusivement de gaz avec un poids atomique ou un poids moléculaire égal ou supérieur à vingt fois l'unité de masse atomique.

5. Système laser à impulsions ultracourtes selon l'une des revendications précédentes,
**caractérisé en ce**
**que** le gaz de remplissage présente de l'argon, du xénon, du crypton, du méthane, du tétrachlorure de carbone ou de l'hexafluorure de soufre ou une combinaison d'au moins deux de ces gaz.

6. Système laser à impulsions ultracourtes selon l'une des revendications précédentes,
**caractérisé en ce**
**que** plus de la moitié des molécules du gaz de remplissage présente la propriété d'une toupie sphérique.

7. Système laser à impulsions ultracourtes selon l'une des revendications précédentes,
**caractérisé en ce**
**que** la section remplie de gaz (9) est réalisée comme un récipient sous pression avec une pression ajustable, en particulier une pression réglable.

8. Système laser à impulsions ultracourtes selon la revendication 7,
**caractérisé en ce**
**que** la pression est réglable par une unité de commande de telle manière qu'une longueur d'impulsion prédéterminée peut être générée.

9. Système laser à impulsions ultracourtes selon la revendication 7 ou 8,
**caractérisé par**
un composant de stockage pour le gaz de remplissage ou ses composants.

10. Système laser à impulsions ultracourtes selon l'une des revendications précédentes,
**caractérisé en ce**
**que** la section remplie de gaz est réalisée comme une cellule de Herriott.

11. Système laser à impulsions ultracourtes selon l'une des revendications précédentes,
**caractérisé par**
un composant pour la génération d'un couplage de mode, en particulier un miroir absorbeur saturable (8).

12. Système laser à impulsions ultracourtes selon l'une des revendications précédentes,
**caractérisé en ce**
**que** le milieu laser (4, 4') présente du Yb:KYW, du Yb:KGW, du Yb:YAG, du Yb:KLuW, du Nd:YAG ou du Nd:Vanadat.

13. Système laser à impulsions ultracourtes selon l'une des revendications précédentes,
**caractérisé en ce**
**qu'**une intensité de pointe à l'intérieur du résonateur laser de plus de 2, en particulier de plus de 5 GW/cm² peut être générée.

14. Système laser à impulsions ultracourtes selon l'une des revendications précédentes,
**caractérisé par**
un composant de couplage d'impulsions électro-optique ou acousto-optique dans le résonateur laser.

15. Procédé pour la génération d'impulsions femtosecondes ou picosecondes dans un système laser à impulsions ultracourtes avec au moins :
• un milieu amplifiant du laser (4) pour produire une émission laser (AS) ;
• un résonateur laser avec au moins un miroir de résonateur (6), et
• une source de pompage (1), en particulier une source de diode laser, pour pomper le milieu laser (4, 4') et un guidage de la marche des rayons de l'émission laser à générer (AS) par une section remplie de gaz (9) à l'intérieur du résonateur laser, en particulier avec une énergie d'impulsion d'1 microjoule à l'intérieur du résonateur laser et/ou un taux de répétition au-dessous de 50 MHw,
**caractérisé en ce que**
la section remplie de gaz (9) est remplie d'un gaz de remplissage composé d'un seul gaz ou d'un mélange de gaz de remplissage différent de la composition de l'air,
- l'indice de réfraction non linéaire n₂ de la section remplie de gaz correspondant substantiellement à celui de l'air et
- le gaz de remplissage présentant un effet de rotation Raman plus faible par comparaison à l'air.
